# FASCICULE DE BREVET EUROPEEN

(11) **EP 1 793 107 B1**
(45) Date de publication et mention de la délivrance du brevet: **01.05.2013**
(21) Numéro de dépôt: 06291810.7
(22) Date de dépôt: 22.11.2006
(51) Int. Cl.: F02D 41/02, F02D 17/02

(54) **Procédé de controle de l'admission d'un moteur à combustion interne, notamment de type essence ou Diesel, et moteurs utilisant un tel procédé**
Verfahren zur Kontrolle der Zuleitung zu einem Verbrennungsmotor, insbesondere mit Benzin- oder Dieselbetrieb, und Motoren, bei denen ein solches Verfahren angewandt wird
Method of controlling the intake of an internal combustion engine, particularly those using petrol or diesel, and engines using such a method

(30) Priorité: 30.11.2005 FR 0512286
(43) Date de publication de la demande: 06.06.2007
(73) Titulaire: Institut Français du Pétrole, 92852 Rueil Malmaison Cedex (FR)
(72) Inventeur: Ranini, Alain, 92500 Rueil Malmaison (FR); Potteau, Sébastien, 78510 Triel sur Seine (FR)

(56) Documents cités:
- DE-A1- 19 812 829
- JP-A- 2002 155 738
- US-A- 4 467 602
- US-A1- 2002 069 638

## Description

La présente invention se rapporte à un procédé de contrôle de l'admission d'un moteur à combustion interne, notamment de type Essence ou Diesel, et à des moteurs utilisant un tel procédé.

Généralement, dans ce type de moteur, les gaz d'échappement sont évacués dans l'atmosphère par une ligne d'échappement qui porte un moyen de dépollution de ces gaz d'échappement avant qu'ils ne soient rejetés dans cette atmosphère.

Avantageusement, ce moyen de dépollution est un catalyseur parcouru par ces gaz et qui est destiné à éliminer certains polluants qu'ils contiennent. Le catalyseur, plus particulièrement le catalyseur dit "trois voies", a pour fonctions principales d'oxyder les hydrocarbures imbrûlés (HC) ainsi que le monoxyde de carbone (CO) et de réduire les oxydes d'azote (NOx), qui sont les polluants habituellement présents dans les gaz d'échappement.

Il est notoire que ce type de catalyseur ne peut remplir son rôle que lorsqu'il a atteint une température minimale de démarrage de fonctionnement ou d'amorçage, dite température de "light off", (de l'ordre de 200°C). Ce niveau de température est indispensable pour permettre la réaction entre les éléments catalytiques que porte le catalyseur et les polluants contenus dans les gaz d'échappement. Cependant, et cela notamment pendant la période de fonctionnement à froid du moteur qui suit le démarrage de ce moteur, la montée en température du catalyseur n'est pas suffisamment rapide, ce qui entraîne un rejet de gaz d'échappement non traités dans l'atmosphère. En conséquence, un accroissement de la rapidité de la montée en température de ce catalyseur est nécessaire pour assurer la dépollution des gaz d'échappement et respecter ainsi les normes appliquées aux moteurs des véhicules automobiles qui se sévérisent. Ce problème se pose également lorsque le moteur est chaud avec un catalyseur chaud (à température de fonctionnement) mais que ce moteur fonctionne à faibles régimes et/ou à faibles couples, tel qu'au ralenti. Dans ces configurations, les gaz d'échappement qui sont évacués du moteur sont à une température telle (inférieure à 200°C) qu'ils ne peuvent maintenir la température du catalyseur suffisamment élevée pour qu'il soit efficace mais bien au contraire le refroidissent par passage au travers de celui-ci.

De nombreuses solutions ont été apportées à ce problème pour augmenter rapidement la température du catalyseur. Ces solutions consistent, pour l'essentiel, à augmenter la température des gaz d'échappement soit en augmentant, pendant une courte durée, la richesse du mélange carburé présent dans les cylindres en réalisant un déficit en air dans le cas d'un moteur Diesel, soit, dans le cas d'un moteur de type Essence, en injectant plus de carburant dans les cylindres avec des combustions réglées plus tardivement et en injectant en parallèle de l'air dans la ligne d'échappement pour créer une postcombustion des gaz d'échappement en amont du catalyseur.

Une autre des solutions, comme mieux décrit dans US 2002/069638 ou DE 198 12 829, consiste à rendre inactif une partie des cylindres du moteur et à laisser en action le reste des cylindres. Ceci permet d'augmenter de manière significative la température des gaz d'échappement issus de ces cylindres actifs et par conséquent d'accélérer la montée en température du catalyseur.

De telles solutions ont pour inconvénients majeurs d'accroître très significativement la consommation de carburant et de nuire au confort de conduite, notamment lorsque les cylindres inactifs sont remis en action

De plus, de par l'augmentation de la richesse ou de par la postcombustion des gaz d'échappement, il se produit un accroissement de l'émission de polluants qui ne sont pas traités par le catalyseur.

Une autre solution est décrite dans JP 2002 155738

La présente invention se propose de remédier aux inconvénients ci-dessus grâce à un procédé d'admission du moteur qui permet d'élever rapidement la température des gaz d'échappement tout en raccourcissant le délai nécessaire pour l'amorçage du catalyseur et cela en minimisant la surconsommation de carburant tout en réduisant les émissions de polluants qui sont produits et non traités pendant la montée en température du catalyseur, jusqu'à sa température d'amorçage.

A cet effet, l'invention concerne un procédé de contrôle de l'admission d'un moteur à combustion interne comportant au moins deux groupes d'au moins un cylindre, dans lesquels est admise une charge pour le fonctionnement dudit moteur, des moyens d'injection de carburant pour chaque groupe de cylindres, un volet de contrôle de l'air d'admission pour chacun de ces groupes, une unité de contrôle du moteur permettant de commander les moyens d'injection de carburant et/ou lesdits moyens de contrôle de l'air d'admission et une ligne d'échappement comportant au moins un moyen de dépollution des gaz d'échappement, caractérisé en ce qu'il consiste, lors du fonctionnement à faibles régimes et/ou à faibles couples du moteur :
- à évaluer la charge totale à admettre dans les cylindres pour assurer le fonctionnement du moteur,
- à commander les moyens d'injection et/ou les moyens de contrôle de l'air d'admission par l'unité de contrôle de manière à admettre une proportion de la charge totale dans l'un des groupes de cylindres qui soit plus grande que dans l'autre des groupes de cylindres et à augmenter la sous-avance de la combustion des cylindres du groupe de cylindres avec la proportion de la charge totale la plus grande pour réaliser une augmentation de la température des gaz d'échappement permettant d'accélérer la montée en température du moyen de dépollution.

Ce procédé peut consister à admettre dans l'un des groupes de cylindres au plus la totalité de la charge totale.

Il peut également consister à admettre, dans l'un des groupes de cylindres, une proportion sensiblement égale à 75% de la charge totale supérieure et à admettre, dans l'autre des groupes de cylindres, le reste de la charge totale.

La charge peut consister en la quantité de carburant à injecter dans les cylindres.

Cette charge peut aussi consister en la quantité de mélange carburé à introduire dans les cylindres.

Le procédé peut consister à permuter l'admission de la proportion la plus forte de la charge totale entre les au moins deux groupes de cylindres.

Les autres caractéristiques et avantages de l'invention apparaîtront à la lecture de la description donnée ci-après à titre illustratif et nullement limitatif, en se référant aux dessins annexés sur lesquels :
- la figure 1 montre schématiquement un moteur à combustion interne utilisant le procédé selon l'invention ;
- la figure 2 montre de manière schématique une variante de moteur à combustion interne utilisant le procédé selon l'invention et
- les figures 3 à 6 sont des graphiques montrant, par rapport à l'état de la technique, l'augmentation de température des gaz d'échappement (figure 3), la réduction des émissions des hydrocarbures imbrûlés (figure 4), des émissions de monoxyde de carbone (figure 5) et du bruit de combustion (figure 6) résultant de l'utilisation du procédé selon l'invention.

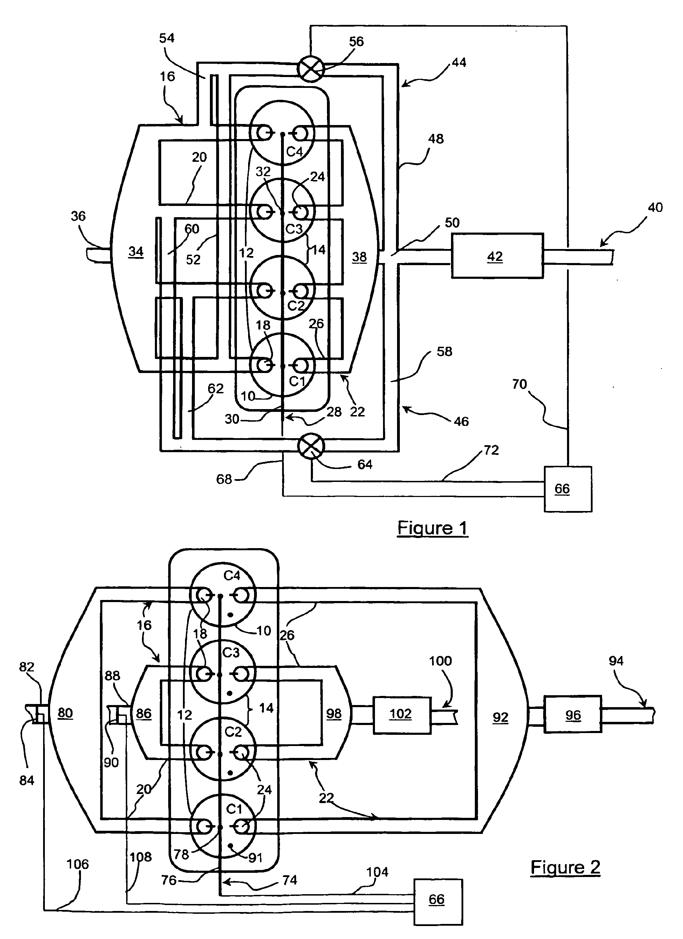

La figure 1 montre un exemple d'un moteur à combustion interne de type à injection directe de carburant, en particulier un moteur Diesel, utilisant le procédé selon l'invention.

Ce moteur comprend au moins deux cylindres ou au moins deux groupes d'au moins un cylindre à l'intérieur desquels se réalise la combustion d'un mélange carburé. Dans l'exemple de la figure 1, le moteur comprend quatre cylindres 10 numérotés de C1 à C4 en partant du bas de la figure 1, pour une meilleure compréhension de la description qui va suivre. Le moteur de cette figure 1 fonctionne selon le cycle d'allumage dit 1, 3, 4, 2, qui est bien connu de l'homme de l'art. A partir de cela, ces cylindres sont séparés en deux groupes 12, 14 de deux cylindres avec pour le groupe 12 les cylindres C1 et C4 et pour le groupe 14 les cylindres C3 et C2. Cet exemple n'écarte pas toutes les autres configurations, comme deux groupes avec un groupe de trois cylindres C1, C4, C3 et un groupe d'un cylindre C2 ou toutes configurations tributaires du cycle d'allumage.

Chaque cylindre comporte au moins un moyen d'admission 16 avec une soupape d'admission 18 et une tubulure d'admission 20, au moins un moyen d'échappement 22 avec une soupape d'échappement 24 et une tubulure d'échappement 26, et un moyen d'injection de carburant 28, tel qu'une rampe d'injection 30 portant des injecteurs 32 permettant d'introduire directement du carburant dans les cylindres. Les tubulures 20 des moyens d'admission 16 sont raccordées à un collecteur d'admission 34 dans lequel est introduit de l'air ambiant ou de l'air suralimenté par une conduite 36. Les tubulures 26 des moyens d'échappement 22 aboutissent à un collecteur d'échappement 38 qui est associé à une ligne d'échappement 40. Cette ligne d'échappement porte des moyens de dépollution 42 des gaz d'échappement circulant dans cette ligne et plus particulièrement mais non exclusivement un catalyseur d'oxydation dans le cas du moteur Diesel, tel qu'illustré à la figure 1.

De manière optionnelle, ce moteur comporte des moyens de recirculation des gaz d'échappement, dits EGR pour "Exhaust Gas Recirculation", qui permettent de réintroduire des gaz brûlés d'échappement dans les cylindres. Cette recirculation permet de pouvoir contrôler la combustion du carburant avec le ou les fluide(s) qui s'y trouve(nt). Plus particulièrement, la réintroduction de ces gaz d'échappement permet de pouvoir doser la quantité d'oxygène présente dans ces cylindres pour assurer la combustion avec le carburant injecté.

Dans le cas de l'exemple décrit, cet EGR se compose de deux circuits EGR distincts 44 et 46. Le circuit 44 comprend une conduite 48 de recirculation des gaz d'échappement qui prend naissance sur la ligne d'échappement 40 en un point 50 situé en aval du collecteur d'échappement 38 et en amont du catalyseur 42. Cette conduite se sépare, au voisinage du collecteur d'admission, en deux ramifications qui aboutissent au même groupe de cylindres. Plus précisément, pour le groupe 12, une ramification 52 aboutit à la tubulure d'admission 20 du cylindre C1 et une autre ramification 54 aboutit à la tubulure d'admission du cylindre C4. Ce circuit comporte aussi une vanne 56, dénommée vanne EGR, située entre le point 50 et les ramifications 52, 54 et qui permet de contrôler la quantité de gaz d'échappement circulant dans la conduite 48. Le circuit EGR 46 comprend également une conduite de recirculation des gaz d'échappement 58 qui débute au point 50 et qui se sépare, au voisinage du collecteur d'admission, en deux ramifications 60, 62. Ces ramifications aboutissent au groupe 14 de cylindres et plus précisément à la tubulure d'admission 20 du cylindre C2 et du cylindre C3. De même, la conduite 58 porte une vanne EGR 64 placée dans la même configuration que la vanne 56.

Comme cela est connu en soi, une unité de contrôle du moteur 66, tel qu'un calculateur-moteur, contrôle le fonctionnement du moteur. Cette unité contient des cartographies ou des tables de données permettant d'évaluer, en fonction des conditions de fonctionnement du moteur, comme le régime du moteur, les paramètres nécessaires à son fonctionnement. Ce calculateur permet aussi de contrôler les organes de ce moteur, comme les moyens d'injection de carburant 28 par une ligne de commande 68 et les vannes 56 et 64 par une ligne de commande 70, 72.

En phase de fonctionnement de ce moteur, le calculateur-moteur détermine si ce moteur est avec un fonctionnement à froid ou si le moteur est chaud mais fonctionne avec des faibles régimes et/ou des faibles couples, notamment grâce au capteur de température que comprend habituellement ce moteur.

Dans ces éventualités, ce calculateur commande les différents organes de ce moteur de façon à augmenter la température des gaz d'échappement pour raccourcir le temps nécessaire pour que le catalyseur 42 soit opérationnel lorsqu'il a atteint sa température d'amorçage ou que la température de fonctionnement de ce catalyseur soit maintenue.

Pour ce faire, il est prévu d'asymétriser la répartition de la charge totale entre les deux groupes de cylindres. Plus particulièrement, l'un des groupes de cylindres reçoit une quantité de charge plus importante que l'autre et cela sans changer la charge globale du moteur. A titre d'exemple, l'un des groupes reçoit 75% de la charge totale initiale et l'autre des groupes le reste de cette charge, c'est-à-dire 25%. Bien entendu, cette asymétrie peut être encore plus grande jusqu'à la coupure de fonctionnement d'un groupe de cylindres en n'introduisant aucune charge. Dans ce cas, les soupapes d'admission et d'échappement de ce cylindre restent activées de façon à utiliser le travail de transvasement des gaz au travers de ces soupapes. Ceci permet d'augmenter la charge du groupe de cylindres en fonctionnement et de participer ainsi à l'augmentation de la température des gaz d'échappement.

Pour réaliser cette asymétrie, le calculateur contient dans sa mémoire ou dans ses tables, une évaluation de la quantité globale de carburant qu'il doit injecter dans les quatre cylindres pendant la phase de fonctionnement à froid.

Au lieu d'injecter la même proportion de la quantité globale de carburant dans chaque cylindre, comme cela se fait selon le procédé de l'état de la technique, ce calculateur commande les injecteurs 32 de façon à ce que la répartition du carburant se réalise d'une manière dissymétrique pour chaque groupe de cylindres. Ainsi, à titre d'exemple, l'un des groupes de cylindres, par exemple le groupe 12 avec les cylindres C1 et C4, reçoit une proportion de la quantité globale de carburant plus importante que celle de l'autre groupe avec les cylindres C2 et C3.

Compte tenu de la forte quantité de carburant injecté dans les cylindres C1 et C4, la combustion qui se réalise dans ces cylindres est plus importante que celle dans les cylindres C2 et C3 et génère des gaz d'échappement à plus haute température que le fonctionnement habituel de ce moteur. Ces gaz à haute température sont évacués des cylindres C1, C4 lors de l'ouverture des soupapes d'échappement 24 et se mélangent avec les gaz d'échappement issus des cylindres C2 et C3. Ce mélange permet d'obtenir des gaz d'échappement dans le collecteur 38 à une température supérieure à celle des gaz d'échappement qui est couramment obtenue dans ce collecteur par le procédé selon l'état de la technique. Les gaz sont ensuite évacués de ce collecteur et traversent le catalyseur 42 tout en augmentant de manière plus rapide la température du corps de celui-ci pour qu'il atteigne sa température d'amorçage.

De façon à éviter un gradient de températures trop important dans le moteur entre les deux groupes de cylindres, il est prévu d'assurer une permutation dans les groupes de cylindres. Ainsi, le calculateur commande les injecteurs 32 de façon à permuter les groupes de cylindres après un fonctionnement d'une certaine durée, par exemple toutes les 10 secondes. Lors de cette permutation, le groupe 14 de cylindres C2 et C3 reçoit la plus grande proportion de carburant et le groupe 12 de cylindre C1 et C4, la proportion la moins importante.

En outre, de façon à contrôler la combustion dans les cylindres de chaque groupe de cylindres, il est prévu de commander les vannes 56 et 64 d'une manière telle qu'une forte quantité d'EGR soit envoyée dans les cylindres fortement chargés et, à l'inverse, d'envoyer une faible quantité d'EGR dans le groupe de cylindres faiblement chargés.

De plus, il est possible d'augmenter encore plus les températures d'échappement en sous-calant davantage les cylindres qui sont les plus chargés grâce à une sous-avance de la combustion des cylindres chargés. En effet, la stabilité de fonctionnement d'un cylindre est d'autant plus faible pour un sous-calage donné que le cylindre est chargé. De manière avantageuse, la sous-avance peut être d'autant plus importante que la charge du cylindre est élevée.

Dés que le catalyseur a atteint sa température de fonctionnement, le calculateur 66 commande les différents organes du moteur de façon à répartir de manière identique la charge dans chaque cylindre.

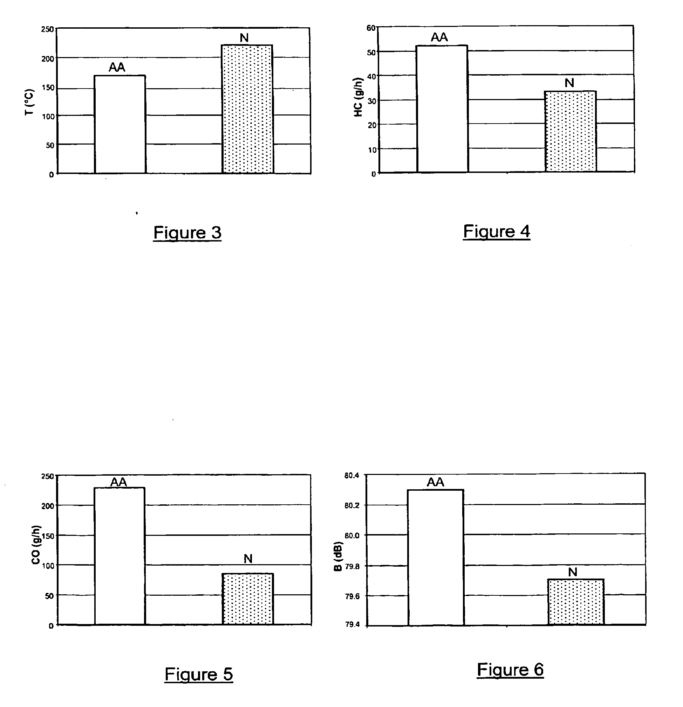

Lors d'une campagne d'essais, le demandeur a réalisé de nombreux tests du procédé selon l'invention dont les résultats sont visibles sur les figures 3 à 6. Ces essais ont consisté à utiliser un moteur Diesel à faible régime (environ 1500 tr/min) avec une faible PME, de l'ordre de 0,5 bar, et à le faire fonctionner à froid selon le procédé de l'invention et selon le procédé de l'art antérieur.

La figure 3 montre, lors d'un fonctionnement à froid, la température des gaz d'échappement (T en degrés Celsius) d'un moteur fonctionnant selon le procédé de l'état de la technique (AA) avec une charge répartie équitablement entre les cylindres et celle d'un moteur fonctionnant selon le procédé de l'invention (N). Il peut être constaté que cette température T augmente d'environ 50°C entre la température des gaz d'échappement du moteur utilisant le procédé selon l'art antérieur et celle du moteur utilisant le procédé selon l'invention. De manière avantageuse, pour le moteur utilisant le procédé selon l'invention, les émissions de polluants sont fortement diminuées, de l'ordre de 36%, pour les hydrocarbures imbrûlés HC (figure 4 avec HC en grammes par heure) et, de l'ordre de 62%, pour le monoxyde de carbone CO (figure 5 avec CO en grammes par heure). De même, le bruit de combustion B (figure 6 avec B en décibel) est réduit d'environ 0,6 dB par rapport au procédé de l'état de la technique.

Ainsi, grâce à l'invention, non seulement la température des gaz d'échappement est augmentée d'une manière non négligeable en favorisant la rapidité de la mise en fonctionnement du catalyseur mais aussi les polluants sont fortement réduits de par la haute température de combustion.

On se reporte maintenant à la figure 2 qui montre une variante de la figure 1 avec une utilisation du procédé selon l'invention en relation avec un moteur à combustion interne à injection directe de type essence, fonctionnant généralement à la stoechiométrie.

Bien entendu, la présente invention peut également s'appliquer à un moteur à combustion interne de type essence à injection séquentielle avec au moins un injecteur de carburant par tubulure d'admission permettant de réaliser une injection indirecte de ce carburant.

Pour des raisons de simplification de la description, l'exemple de la figure 2 comporte les mêmes références pour les éléments communs aux deux figures.

Ce moteur comprend également deux groupes 12, 14 de deux cylindres, référencés C1 et C4 pour le groupe 12 et C2 et C3 pour le groupe 14. Chaque cylindre comprend au moins un moyen d'admission 16 avec une soupape d'admission 18 et une tubulure d'admission 20, au moins un moyen d'échappement 22 avec une soupape d'échappement 24 et une tubulure d'échappement 26, et un moyen d'injection indirecte de carburant 74, par exemple une rampe d'injection 76 avec des injecteurs 78 introduisant du carburant dans les cylindres pour y réaliser un mélange carburé. Les tubulures 20 du groupe 12 de cylindres C1 et C4 sont raccordées à un collecteur d'admission 80 dans lequel est introduit de l'air d'admission (air ambiant ou air suralimenté) par une conduite 82 dont le passage est contrôlée par un moyen d'obturation, comme un volet papillon 84. Les tubulures 20 du groupe 14 de cylindres C2 et C3 sont également raccordées à un autre collecteur d'admission 86 dans lequel est introduit de l'air d'admission par une conduite 88 contrôlée par un volet papillon 90. Les cylindres comportent, comme connu en soi, un moyen d'allumage du mélange carburé, comme une bougie 91.

De manière symétrique à celui des tubulures d'admission, les tubulures d'échappement 26 du groupe 12 de cylindres C1 et C4 sont reliées à un collecteur d'échappement 92 à partir duquel part une ligne d'échappement 94 portant un moyen de dépollution des gaz d'échappement, comme un catalyseur trois voies 96. De même, les tubulures d'échappement 26 du groupe 14 de cylindres C2 et C3 sont connectées à un collecteur d'échappement 98 avec une ligne d'échappement 100 et un moyen de dépollution 102, comme un catalyseurs trois voies. Avantageusement, les lignes 94 et 100 peuvent se rejoindre en aval des catalyseurs 96 et 102 pour former une seule et unique ligne d'échappement (non représentée).

Le moteur comprend également un calculateur-moteur 66 permettant de contrôler le fonctionnement du moteur. Ce calculateur permet notamment de commander les injecteurs 78 par une ligne de commande 104 et les volets papillons 84, 90 par une ligne de commande 106 et 108 ainsi que les bougies 91 par une ligne de commande non représentée.

Comme pour le fonctionnement de l'exemple du moteur de la figure 1, une asymétrisation de la charge est réalisée pour augmenter la température des gaz d'échappement pour un fonctionnement à froid du moteur ou à chaud avec des faibles régimes et/ou des faibles couples.

Pour réaliser cette asymétrie, le calculateur évalue la charge totale qui doit être injectée dans les quatre cylindres pendant la phase de fonctionnement à froid classique et qui correspond à la quantité totale de mélange carburé (air ou air suralimenté additionné de carburant) à introduire dans les cylindres. A partir de cette évaluation, ce calculateur commande les injecteurs 78 et les volets 84, 90 de façon à ce que la répartition du mélange carburé se fasse d'une manière telle qu'une quantité de mélange carburé soit plus importante dans un groupe de cylindre, par exemple le groupe 12 avec les cylindres C1 et C4, que celle de l'autre groupe 14 avec les cylindres C2 et C3.

Grâce à une quantité de mélange carburé plus importante dans les cylindres C1 et C4, la combustion qui s'y déroule, après la commande de la bougie 91 par le calculateur, génère une température de combustion plus forte que celle dans les cylindres C2 et C3. Par conséquent, les gaz d'échappement produits par cette combustion sont à plus haute température que le fonctionnement à froid classique de ce moteur. Ces gaz sont ensuite évacués, lors de l'ouverture des soupapes d'échappement 24, dans le collecteur d'échappement 92 d'où ils ressortent pour traverser le catalyseur 96 en permettant ainsi d'augmenter la température de celui-ci.

De façon à également éviter de forts gradients de température dans le moteur, le calculateur 66 commande les injecteurs 78 et les volets 84, 90 de façon à permuter les proportions de la charge dans les groupes de cylindres après un fonctionnement d'une certaine durée, par exemple toutes les 10 secondes. Ainsi lors de cette permutation, le groupe 14 de cylindres C2 et C3 reçoit la plus grande quantité de mélange carburé et le groupe 12 de cylindre C1 et C4, la quantité la moins importante.

De même, comme précédemment mentionné en relation avec la figure 1, il peut être envisagé de réaliser un sous-calage des cylindres qui sont les plus chargés grâce à une sous-avance de la combustion de ces cylindres chargés de façon à augmenter encore les températures d'échappement.

Bien entendu, toutes les stratégies sont envisageables pour réaliser l'augmentation de la température des catalyseurs. Il peut être notamment envisagé de réaliser une asymétrisation de la charge pour l'un des groupes de cylindres jusqu'à ce que le catalyseur concerné ait atteint sa température d'amorçage de fonctionnement puis de permuter l'asymétrisation dans l'autre groupe de cylindres pour augmenter la température dans l'autre des catalyseurs jusqu'à sa température de fonctionnement.

Dès que les catalyseurs ont atteint leur température de fonctionnement, le calculateur 66 commande les injecteurs 78 et les volets 84, 90 de manière à ce que la charge soit régulièrement répartie dans les groupes de cylindres et par conséquent dans chaque cylindre.

La présente invention n'est pas limitée aux exemples de réalisation décrits ci-dessus mais englobe toutes variantes et tous équivalents sans sortir du cadre de l'invention tel que défini dans les revendications.

## Revendications

1. Procédé de contrôle de l'admission d'un moteur à combustion interne comportant au moins deux groupes (12, 14) d'au moins un cylindre (C1-C4), dans lesquels est admise une charge pour le fonctionnement dudit moteur, des moyens d'injection de carburant (28, 76) pour chaque groupe de cylindres, un volet de contrôle (84, 90) de l'air d'admission pour chacun de ces groupes, une unité de contrôle du moteur (66) permettant de commander les moyens d'injection de carburant et/ou lesdits moyens de contrôle de l'air d'admission, et une ligne d'échappement (40, 94, 100) comportant au moins un moyen de dépollution (42, 96, 102) des gaz d'échappement, **caractérisé en ce qu'**il consiste, lors du fonctionnement à faibles régimes et/ou à faibles couples du moteur :
- à évaluer la charge totale à admettre dans les cylindres pour assurer le fonctionnement du moteur,
- à commander les moyens d'injection et/ou les moyens de contrôle de l'air d'admission par l'unité de contrôle (66) de manière à admettre une proportion de la charge totale dans l'un (12) des groupes de cylindres (C1, C4) qui soit plus grande que dans l'autre (14) des groupes de cylindres (C2, C3) et à augmenter la sous-avance de la combustion des cylindres du groupe de cylindres avec la proportion de la charge totale la plus grande d'autant que la charge est élevée pour réaliser une augmentation de la température des gaz d'échappement permettant d'accélérer la montée en température du moyen de dépollution (42, 96, 102).

2. Procédé de contrôle de l'admission d'un moteur à combustion interne selon la revendication 1, **caractérisé en ce qu'**il consiste à admettre dans l'un des groupes (12, 14) de cylindres au plus la totalité de la charge totale.

3. Procédé de contrôle de l'admission d'un moteur à combustion interne selon la revendication 1, **caractérisé en ce qu'**il consiste à admettre, dans l'un (12) des groupes de cylindres (C1, C4), une proportion sensiblement égale à 75% de la charge totale supérieure et à admettre dans l'autre (14) des groupes de cylindres (C2, C3) le reste de la charge totale.

4. Procédé de contrôle de l'admission d'un moteur à combustion interne selon l'une des revendications précédentes, **caractérisé en ce que** la charge consiste en la quantité de carburant à injecter dans les cylindres.

5. Procédé de contrôle de l'admission d'un moteur à combustion interne selon l'une des revendications 1 à 3, **caractérisé en ce que** la charge consiste en la quantité de mélange carburé à introduire dans les cylindres.

6. Procédé de contrôle de l'admission d'un moteur à combustion interne selon l'une des revendications précédentes, **caractérisé en ce qu'**il consiste à permuter l'admission de la proportion la plus forte de la charge totale entre les au moins deux groupes de cylindres.

## Claims

1. A method of controlling the intake of an internal-combustion engine comprising at least two groups (12, 14) of at least one cylinder (C1-C4) wherein a feed is allowed for operation of said engine, fuel injection means (28, 76) for each group of cylinders, an intake air control shutter (84, 90) for each group, an engine control unit (66) allowing the fuel injection means and/or said intake air control means to be controlled, and an exhaust line (40, 94, 100) comprising at least one exhaust gas depollution means (42, 96, 102), **characterized in that** it consists, under low engine speed and/or low engine torque conditions:
- in evaluating the total feed to be allowed into the cylinders to operate the engine,
- in controlling the injection means and/or the intake air control means by means of control unit (66) so as to allow a proportion of the total feed into one (12) of the groups of cylinders (C1, C4) that is greater than in the other (14) group of cylinders (C2, C3) and in increasing the combustion sub-advance of the cylinders of the group of cylinders with the greater total feed proportion, all the more so as the feed proportion is great, so as to achieve an exhaust gas temperature increase allowing to speed up the rise in temperature of depollution means (42,96, 102).

2. A method of controlling the intake of an internal-combustion engine as claimed in claim 1, **characterized in that** it consists in allowing at most all of the total feed into one of groups (12, 14) of cylinders.

3. A method of controlling the intake of an internal-combustion engine as claimed in claim 1, **characterized in that** it consists in allowing into one (12) of the groups of cylinders (C1, C4) a proportion of substantially 75 % of the greater proportion of the total feed and in allowing into the other (14) group of cylinders (C2, C3) the rest of the total feed.

4. A method of controlling the intake of an internal-combustion engine as claimed in any one of the previous claims, **characterized in that** the feed consists of the amount of fuel to be injected into the cylinders.

5. A method of controlling the intake of an internal-combustion engine as claimed in ony one of claims 1 to 3, **characterized in that** the feed consists of the amount of fuel mixture to be fed into the cylinders.

6. A method of controlling the intake of an internal-combustion engine as claimed in any one of the previous claims, **characterized in that** it consists in switching the intake of the greater proportion of the total feed between the at least two groups of cylinders.

## Patentansprüche

1. Verfahren zum Steuern des Einlasses eines Verbrennungsmotors, der mindestens zwei Gruppen (12, 14) aus mindestens einem Zylinder (C1-C4) aufweiset, in welche eine Charge für den Betrieb des Motors eingelassen wird, Kraftstoffeinspritzmittel (28, 76) für jede Zylindergruppe, ein Steuerventil (84, 90) der Einlassluft für jede dieser Gruppen, eine Steuereinheit (66) des Motors, die es erlaubt, die Kraftstoffeinspritzmittel und/oder die Steuermittel der Einlassluft zu steuern, und eine Auspuffleitung (40, 94, 100), die mindestens ein Reinigungsmittel (42, 96, 102) der Abgase aufweist, **dadurch gekennzeichnet, dass** es darin besteht, beim Betrieb mit niedrigen Drehzahlen und/oder niedrigen Motormomenten:
- die Gesamtcharge, die in die Zylinder einzulassen ist, zu beurteilen, um den Betrieb des Motors sicherzustellen,
- die Einspritzmittel und/oder die Steuermittel der Einlassluft durch die Steuereinheit (66) derart zu steuern, dass ein Anteil der Gesamtcharge in eine (12) der Zylindergruppen (C1, C4) eingelassen wird, der größer ist als in der anderen (14) der Zylindergruppen (C2, C3), und die Sub-Voreilung der Verbrennung der Zylinder der Zylindergruppe mit dem größten Anteil der Gesamtcharge umso mehr zu erhöhen als die Charge groß ist, um eine Erhöhung der Temperatur der Abgase auszuführen, die es erlaubt, den Temperaturanstieg des Reinigungsmittels (42, 96, 102) zu beschleunigen.

2. Verfahren zum Steuern des Einlasses eines Verbrennungsmotors nach Anspruch 1, **dadurch gekennzeichnet, dass** es darin besteht, in eine der Zylindergruppen (12, 14) maximal die gesamte Gesamtcharge einzulassen.

3. Verfahren zum Steuern des Einlasses eines Verbrennungsmotors nach Anspruch 1, **dadurch gekennzeichnet, dass** es darin besteht, in eine (12) der Zylindergruppen (C1, C4) einen Anteil im Wesentlichen gleich 75 % der größeren Gesamtcharge einzulassen und in die andere (14) der Zylindergruppen (C2, C3) den Rest der Gesamtcharge.

4. Steuerverfahren des Einlasses eines Verbrennungsmotors nach einem der vorhergehenden Ansprüche, **dadurch gekennzeichnet, dass** die Charge aus der in die Zylinder einzuspritzenden Kraftstoffmenge besteht.

5. Steuerverfahren des Einlasses eines Verbrennungsmotors nach einem der Ansprüche 1 bis 3, **dadurch gekennzeichnet, dass** die Charge aus der Brennstoffgemischmenge, die in die Zylinder einzulassen ist, besteht.

6. Steuerverfahren des Einlasses eines Verbrennungsmotors nach einem der vorhergehenden Ansprüche, **dadurch gekennzeichnet, dass** es darin besteht, den Einlass des größeren Anteils der Gesamtcharge zwischen den mindestens zwei Zylindergruppen zu vertauschen.
